# EUROPEAN PATENT APPLICATION

(11) **EP 4 709 006 A1**
(43) Date of publication of application: **11.03.2026**
(21) Application number: 24807518.6
(22) Date of filing: 13.05.2024
(51) Int. Cl.: H04W 72/12, H04W 72/0453, H04W 72/0446, H04B 1/7163

(54) **NARROW BAND RESOURCE ALLOCATION METHOD AND DEVICE USING ULTRA WIDE BAND COMMUNICATION**

(30) Priority: 12.05.2023 KR 20230062036
(71) Applicant: Samsung Electronics Co., Ltd., Suwon-si, Gyeonggi-do 16677 (KR)
(72) Inventor: LEE, Mingyu, Suwon-si Gyeonggi-do 16677 (KR); HA, Taeyoung, Suwon-si Gyeonggi-do 16677 (KR); SO, Youngwan, Suwon-si Gyeonggi-do 16677 (KR)
(74) Representative: Gulde & Partner
(86) International application number: PCT/KR2024/006496
(87) International publication number: WO 2024/237647

(57) **Abstract**

The present disclosure discloses a method for operating an ultra wide band (UWB) channel and a narrow band (NB) channel together. A method of a first UWB device, according to various embodiments of the present disclosure, may comprise the steps of: performing ranging in a UWB channel; transmitting a packet including NB resource allocation information to a second UWB device, in the UWB channel or a NB channel controlling the UWB channel; and performing data communication with the second UWB device, in a first NB channel configured on the basis of the NB resource allocation information. Other various embodiments are possible.

## Description

### [Technical Field]

The disclosure relates to ultra wide band (UWB) communication and, more specifically, to a method and device for narrow band (NB) resource allocation using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Invention]

### [Technical Problem]

The disclosure proposes an NB resource allocation method using UWB communication.

### [Technical Solution]

According to an embodiment of the disclosure, a method of a first ultra wide band (UWB) device may include performing ranging in a UWB channel, transmitting a packet including narrow band (NB) resource allocation information to a second UWB device in the UWB channel or an NB channel controlling the UWB channel, and performing data communication with the second UWB device in a first NB channel configured based on the NB resource allocation information.

According to an embodiment of the disclosure, a method of a second ultra wide band (UWB) device may include receiving a packet including narrow band (NB) resource allocation information from a first UWB device in a UWB channel or an NB channel controlling the UWB channel, and performing data communication with the first UWB device in an NB channel configured based on the NB resource allocation information.

A first ultra wide band (UWB) device according to an embodiment of the disclosure includes a transceiver, and a controller. The controller may perform ranging in a UWB channel, control to transmit a packet including narrow band (NB) resource allocation information to a second UWB device in the UWB channel or an NB channel controlling the UWB channel, and perform data communication with the second UWB device in a first NB channel configured based on the NB resource allocation information.

A second ultra wide band (UWB) device according to an embodiment of the disclosure includes a transceiver, and a controller. The controller may receive a packet including narrow band (NB) resource allocation information from a first UWB device in a UWB channel or an NB channel controlling the UWB channel, and perform data communication with the first UWB device in an NB channel configured based on the NB resource allocation information.

### [Advantageous Effects]

The disclosure provides a method for efficiently performing data communication of a UWB device by operating a UWB channel and an NB channel.

### [Brief Description of Drawings]

FIG. 1A illustrates an example architecture of a UWB device according to an embodiment of the disclosure.
FIG. 1B illustrates a communication system including a UWB device according to an embodiment of the disclosure.
FIG. 2 illustrates a method for performing an NB procedure and a UWB procedure by a UWB device according to an embodiment of the disclosure.
FIG. 3 illustrates an example of a structure of a ranging block and round used for UWB ranging according to an embodiment of the disclosure.
FIG. 4 illustrates a UWB ranging operation according to an embodiment of the disclosure.
FIG. 5 illustrates a UWB ranging operation according to another embodiment of the disclosure.
FIG. 6 illustrates an operation by a UWB device in a ranging area network according to an embodiment of the disclosure.
FIG. 7A illustrates an advertising operation according to an embodiment of the disclosure.
FIG. 7B illustrates an advertising operation and a connection setup operation according to an embodiment of the disclosure.
FIG. 8 is a view illustrating a UWB ranging method in a system including a plurality of gates according to an embodiment of the disclosure.
FIG. 9 is a view illustrating a UWB-based NB resource allocation method according to an embodiment of the disclosure.
FIG. 10 is a view illustrating an NB Allocation IE and an NB Allocation procedure according to an embodiment of the disclosure.
FIG. 11 is a view illustrating an NB Allocation IE and an NB Allocation procedure according to another embodiment of the disclosure.
FIG. 12 illustrates a structure of a first UWB device according to an embodiment of the disclosure.
FIG. 13 illustrates a structure of a second UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the disclosure is omitted. This is for further clarifying the gist of the present disclosure without making it unclear.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skill in the art of the category of the present disclosure. The disclosure is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be directed to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the disclosure are described in detail with reference to the accompanying drawings. Further, although a communication system using UWB is described in connection with embodiments of the disclosure, as an example, embodiments of the disclosure may also apply to other communication systems with similar technical background or features. For example, a communication system using Bluetooth or ZigBee may be included therein. Further, embodiments of the disclosure may be modified in such a range as not to significantly depart from the scope of the disclosure under the determination by one of ordinary skill in the art and such modifications may be applicable to other communication systems.

When determined to make the subject matter of the disclosure unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Ranging device" may be a device capable of performing UWB ranging. In the disclosure, the ranging device may be a ranging device (RDEV) or enhanced ranging device (ERDEV) defined in, e.g., IEEE 802.15.4/4z. In the disclosure, the ranging device may be referred to as a UWB device.

"Advertiser" may be a device (e.g., ranging device) that transmits a message for discovery. For example, the advertiser may be a device that transmits (or broadcasts) an advertisement message through a mirroring channel or transmits (or broadcasts) a discovery beacon (message) through a discovery channel.

"Scanner" may be a device (e.g., ranging device) that receives a message for discovery. For example, the scanner may be a device that scans the mirroring channel to receive an advertisement message or scans the discovery channel to receives a discovery beacon (message). In this disclosure, the scanner may be referred to as an observer.

"Controller" may be a device (e.g., ranging device) that defines and controls ranging control messages (RCM) (or control messages).

"Controlee" may be a device (e.g., ranging device) using a ranging parameter in the RCM (or control message) received from the controller.

"Initiator" may be a device (e.g., ranging device) that initiates a ranging exchange.

"Responder" may be a device (e.g., ranging device) that responds to the Initiator in a ranging exchange.

"In-band" may be data communication that uses UWB as an underlying wireless technology.

"Out-of-band (OOB)" may be data communication that does not use UWB as an underlying wireless technology.

"UWB Session" may be a period from when the controller and the controlee start communication through UWB until the communication stops. In the UWB session, a ranging frame RFRAME may be transferred, a data frame may be transferred, or both a ranging frame and a data frame may be transferred.

"UWB session ID" may be an ID (e.g., a 32-bit integer) that identifies the UWB session, shared between the controller and the controlee.

"UWB session key" may be a key used to protect the UWB Session. The UWB session key may be used to generate a scrambled timestamp sequence (STS). In this disclosure, the UWB session key may be a UWB ranging session key (URSK), and may be abbreviated as a session key.

"UWB subsystem (UWBS)" may be a hardware component implementing the UWB PHY and MAC specifications included in the UWB device. In this disclosure, the UWB PHY and MAC specifications may be, e.g., the PHY and MAC specifications defined in, e.g., IEEE 802.15.4/4z. In this disclosure, the UWBS may be referred to as a UWB component.

"UWB-enabled application" may be an application for a service (UWB service). In this disclosure, "UWB-enabled Application" may be abbreviated as an application or a UWB application.

"Service" may be an implementation of a use case that provides a service to an end-user. In this disclosure, the service may be referred to as a UWB service.

"Service data" may be data defined by a service provider that needs to be transferred between two ranging devices to implement a service.

"Service provider" may be an entity that defines and provides hardware and software required to provide a specific service to an end-user.

"STS" may be a ciphered sequence for increasing the integrity and accuracy of ranging measurement timestamps.

Unlike "static STS," "dynamic STS mode" may be an operation mode in which the STS is not repeated during a ranging session. In this mode, the STS may be managed by the ranging device, and the ranging session key for generating STS may be managed by a secure component.

"Static STS mode" is an operation mode in which STS is repeated during a session, and does not need to be managed by the Secure Component.

"Secure channel" may be a data channel that prevents overhearing and tampering.

"Secure component" may be an entity (e.g., secure element (SE) or trusted execution environment (TEE)) having a defined security level that interfaces with UWBS for the purpose of providing RDS to UWBS, e.g., when dynamic STS is used.

"Secure ranging" may be ranging based on STS generated through a strong encryption operation.

"UWB channel" may be one of candidate UWB channels allocated for UWB communication. Candidate UWB channels allocated for UWB communication may be channels allocated for UWB communication. The UWB channel may be used for UWB communication (e.g., UWB ranging and/or transaction). For example, the UWB channel may be used for transmission/reception of a ranging frame RFRAME and/or transmission/reception of a data frame. As an embodiment, one or a plurality of UWB channels may be operated together.

"Narrow band (NB) channel" may be a channel having a narrower bandwidth than the UWB channel. As an embodiment, the NB channel may be a subchannel of one of the candidate UWB channels allocated for UWB communication or a channel using a specific bandwidth of another available band (e.g., a portion of an industrial, scientific and medical (ISM) band). Candidate UWB channels allocated for UWB communication may be channels allocated for UWB communication. The NB channel may be used for advertising, device discovery, and/or connection setup for additional parameter negotiation/authentication. For example, the NB channel may be used for transmission and reception of a discovery beacon (message), an advertisement message, an additional advertising message, a connection request message, and/or a connection confirmation message. As an embodiment, one or a plurality of NB channels may be operated together. As an embodiment, the NB channel may be used for in-band communication, like the UWB channel.

"Mirroring channel" is one of the NB channels and may be a channel used to provide information about device-to-device discovery and UWB channel occupancy. The mirroring channel may be coupled (or synchronized) with the UWB channel. For discovery, an advertisement message may be transmitted through a mirroring channel. As an embodiment, the advertisement message may be transmitted through the mirroring channel when the UWB channel (communication) is activated (UWB activation case). In this disclosure, the mirroring channel may be referred to as an advertisement channel or an NB advertisement channel or an NB mirroring channel. The advertisement message may be referred to as a first advertisement message or an NB advertisement message. As an embodiment, one or more mirroring channels may be operated together.

"discovery channel" is one of the NB channels and may be a channel used for device-to-device discovery and connection setup. The discovery channel may not be coupled (or synchronized) with the UWB channel. For discovery, a discovery beacon (message) may be transmitted through a discovery channel. As an embodiment, the discovery beacon (message) may be transmitted through the discovery channel regardless of whether the UWB channel (communication) is activated. The discovery beacon (message) may be transmitted through the discovery channel not only in the UWB activation case but also in the UWB de-activation case. In this disclosure, the discovery channel may be referred to as an NB discovery channel. The discovery beacon may be referred to as a discovery message, an NB discovery beacon, or an NB discovery message. As an embodiment, one or more discovery channels may be operated together.

When determined to make the subject matter of the disclosure unnecessarily unclear, the detailed description of related known functions or features may be skipped in describing the disclosure.

Hereinafter, various embodiments of the disclosure are described with reference to the accompanying drawings.

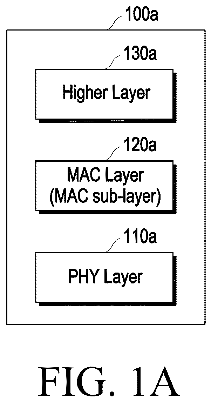

FIG. 1A illustrates an example architecture of a UWB device according to an embodiment of the disclosure.

Referring to FIG. 1A, a UWB device 100a may include at least one PHY layer 110a, a MAC layer (MAC sublayer) 120a and/or a higher layer 130a.

### PHY layer

At least one PHY layer 110a may include a transceiver with a low-level control mechanism. In this disclosure, the transceiver may be referred to as an RF transceiver or a radio transceiver.

In an embodiment, the at least one PHY layer 110a may include at least one first transceiver supporting a UWB channel and at least one second transceiver supporting an NB channel having a narrower bandwidth than the UWB channel. In this disclosure, the first transceiver may be referred to as a UWB transceiver. The second transceiver may be referred to as an NB transceiver.

In another embodiment, at least one PHY layer 110a may include a transceiver (dual-channel transceiver) that supports both the UWB channel and the NB channel.

In an embodiment, the PHY layer 110a may support at least one of the following functions.
Transceiver activation and deactivation function (transceiver on/off function)
Energy detection function
Channel selection function
Clear channel assessment (CCA) function
Synchronization function
Low-level signaling function
UWB ranging, positioning and localization functions
Spectrum resource management function
Function to transmit/receive packets through physical medium
MAC layer

The MAC layer 120a provides an interface between the upper layer 130a and the PHY layer 120a.

In an embodiment, the MAC layer 120a may provide two services as follows.
MAC data service: A service that enables transmission and reception of MAC protocol data unit (PDU) through the PHY
MAC management service: Service interfacing to MAC sublayer management entity (MLME) service access point (SAP) (MLME-SAP)

In an embodiment, the MAC layer 120a may support at least one of the following functions.
Device discovery and connection setup function
Channel access function (function of access to physical channel (e.g., NB channel/UWB channel))
Synchronization function (e.g., synchronization between NB channel (mirroring channel) and UWB channel)
Interference mitigation function based on energy detection
Functions related to narrowband signaling
Guaranteed timeslot (GTS) management function
Frame delivery function
UWB ranging function
PHY parameter change notification function
Security function
Upper layer

The upper layer 130a may include a network layer providing functions, such as network configuration and message routing, and/or an application layer providing an intended function of the device.

In an embodiment, the application layer may be a UWB-enabled application layer for providing a UWB service.

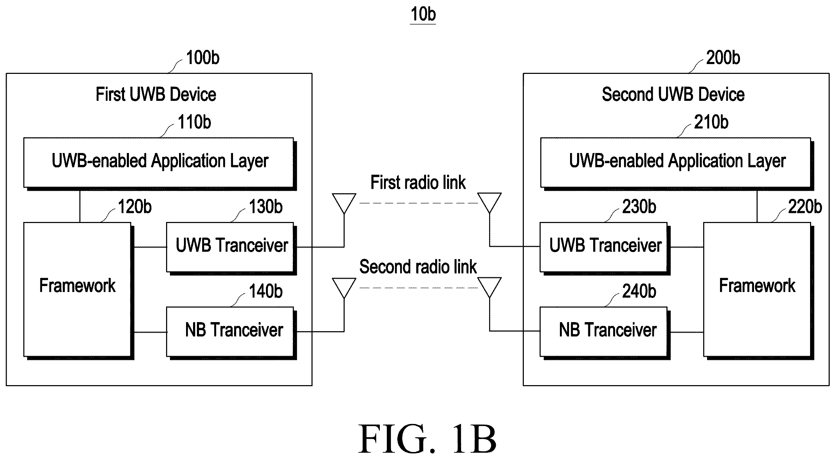

FIG. 1B illustrates a communication system including a UWB device according to an embodiment of the disclosure.

Referring to FIG. 1B, the communication system 10b may include a first UWB device 100b and a second UWB device 200b. The first UWB device 100b and/or the second UWB device 200b of FIG. 1B may be an example of the UWB device 100a of FIG. 1A.

The first UWB device 100b may include a UWB-enabled application layer 110b, a framework 120b, at least one UWB transceiver 130b, and/or at least one NB transceiver 140b.. The second UWB device 200b may include a UWB-enabled application layer 210b, a framework 220b, at least one UWB transceiver 230b, and/or at least one NB transceiver 240b.

In FIG. 1B, the UWB transceiver and the NB transceiver of each device are illustrated as separate components, but the components are divided according to their operations/functions. In other words, the UWB transceiver and the NB transceiver are not limited as implemented as separate physical components (e.g., separate chipsets). Accordingly, the UWB transceiver and the NB transceiver each may be implemented as a separate chipset, or the UWB transceiver and the NB transceiver may be implemented as one integrated chipset.

The UWB-enabled application layers 110b and 210b may be upper application layers for UWB services.

The framework 120b or 220b may be an entity that collectively manages the UWB transceiver 130b or 230b and the NB transceiver 140b or 240b. In an embodiment, the framework 120b or 220b may support a function to control UWB/NB communication (e.g., medium access control (MAC) or UWB/NB transceiver synchronization function) and/or a function for communicating obtained information to a higher application layer 110b or 210b.

The UWB transceiver 130b or 230b may support at least one of candidate UWB channels allocated for UWB communication. In other words, the UWB transceiver 130b or 230b may support at least one UWB channel. At least one UWB channel supported by the UWB transceiver 130b or 230b or the UWB transceiver 130b or 230b may be used for UWB communication (e.g., UWB ranging and/or transaction). For example, at least one UWB channel supported by the UWB transceiver 130b or 230b or the UWB transceiver 130b or 230b may be used for transmitting/receiving a ranging frame RFRAME and/or a data frame.

The NB transceiver 140b or 240b may support at least one NB channel having a narrower bandwidth (e.g., 50 MHz or less) than a UWB channel. At least one NB channel supported by the NB transceiver 140b or 240b or the NB transceiver 140b or 240b may be used for advertisement (discovery) and/or narrowband signaling.

In an embodiment, the NB channel may be a subchannel of one of the candidate UWB channels allocated for UWB communication. In another embodiment, the NB channel may be a channel using a specific bandwidth of another available band (e.g., some of industrial, scientific and medical (ISM) bands).

As an embodiment, the NB channel may be used for in-band communication, like the UWB channel. In an embodiment, at least one or at least one of channels using a specific bandwidth of an available band (e.g., part of the industrial, scientific, and medical (ISM) band) may be allocated as the mirroring channel. In an embodiment, the mirroring channel may be used to transfer the advertisement message.

Further, at least one of the remaining subchannel(s) or channel(s) not allocated as the mirroring channel may be allocated as a channel for connection setup (connection setup channel). In the disclosure, the channel for connection setup may be referred to as a second subchannel, an NB connection setup channel, or a sub advertisement channel.

In an embodiment, the connection setup channel may be used for transferring an additional advertisement message including additional advertising information not transmitted through the advertisement channel, for additional parameter negotiation, or for authentication. In this disclosure, the additional advertisement message may be referred to as a second advertisement message or an additional NB advertisement message.

In an embodiment, the discovery channel may be used to transfer discovery beacons and for connection setup. As such, when the discovery channel is used, device discovery and connection setup may be performed through one channel. In contrast, when using the mirroring channel, a separate connection setup channel needs to be allocated for connection setup.

The NB channel has a narrower bandwidth than the UWB channel. However, the band of the NB channel may be the same as or different from the band of the UWB channel. For example, the NB channel and the UWB channel may use different bands. For example, the channel number (or band group number) of the candidate UWB channel including the subchannel(s) allocated as the NB channel and the channel number (or band group number) of the candidate UWB channel allocated as the UWB channel may be different from each other. As another example, the NB channel and the UWB channel may use the same band. For example, the channel number (or band group number) of the candidate UWB channel including the subchannel(s) allocated as the NB channel and the channel number (or band group number) of the candidate UWB channel allocated as the UWB channel may be identical to each other.

In an embodiment, the first UWB device 100b and the second UWB device 200b may perform a UWB communication (procedure) (in-band communication) through a first radio link (UWB channel) established through the UWB transceiver 110b of the first UWB device 100b and the UWB transceiver 210b of the second UWB device 200b.

In an embodiment, the first UWB device 100b and the second UWB device 200b may perform an NB communication (procedure) (in-band communication) through a second radio link (NB channel) established through the NB transceiver 110b of the first UWB device 100b and the NB transceiver 210b of the second UWB device 200b.

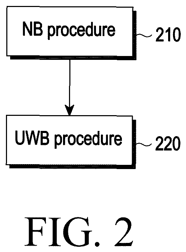

FIG. 2 illustrates a method for performing an NB procedure and a UWB procedure by a UWB device according to an embodiment of the disclosure.

The UWB device of FIG. 2 may be, e.g., the UWB device of FIG. 1A or 1B.

Referring to FIG. 2, the UWB device may perform the NB procedure 210 and the UWB procedure 220. The NB procedure 210 and UWB procedure 220 may be managed or controlled by the MAC layer (entity) of the UWB device.

### NB procedure 210

In the disclosure, the NB procedure 210 means a procedure performed using at least one NB channel. The NB procedure 210 may be performed before the UWB procedure 220.
The NB procedure 210 may include at least one of the following operations.
An operation in which the UWB device transmits and/or receives an advertisement message through at least one mirroring channel (advertising operation)
An operation in which the UWB device transmits and/or receives a discovery beacon (message) through at least one discovery channel (discovery operation)
An operation in which the UWB device transmits and/or receives an additional advertisement message, a connection request message, and/or a connection confirmation message through at least one connection setup channel (first connection setup operation)
An operation in which the UWB device transmits and/or receives a connection request message and/or a connection confirmation message through at least one discovery channel (second connection setup operation)
UWB procedure 220

In the disclosure, the UWB procedure 220 means a procedure performed using at least one UWB channel.

The UWB procedure 220 may include at least one of the following operations.
An operation in which a UWB device performs UWB ranging with another UWB device (UWB ranging operation)
An operation in which a UWB device exchanges service data with another UWB device (transaction operation)

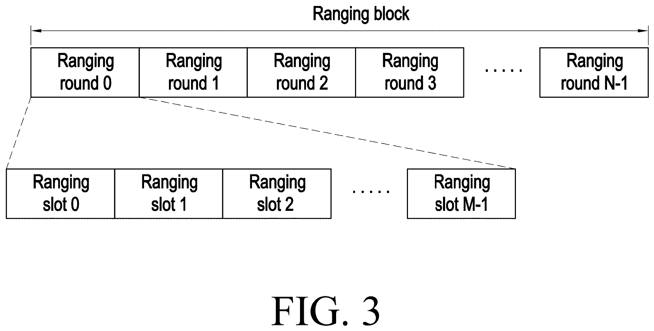

FIG. 3 illustrates an example of a structure of a ranging block and round used for UWB ranging according to an embodiment of the disclosure.

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 3, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

In the disclosure, ranging round may be abbreviated as a round, ranging block as a block, and ranging slot as a slot.

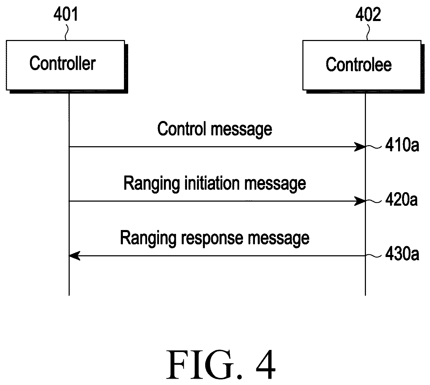

FIG. 4 illustrates a UWB ranging operation according to an embodiment of the disclosure.

The UWB ranging operation of FIG. 4 may be an example of the UWB ranging operation of the UWB procedure of FIG. 2. The UWB ranging operation of FIG. 4 may be performed through a UWB channel.

In the embodiment of FIG. 4, UWB ranging may be, e.g., single-sided two-way ranging (SS-TWR) or double-sided two-way ranging (DS-TWR).

In the embodiment of FIG. 4, it is assumed that the controller 401 serves as an initiator, and the controlee 402 serves as a responder.

Referring to operation 410a, the controller 401 may transmit a control message (ranging control message) for controlling UWB ranging to the controlee 402. For example, the controller 401 may transmit a control message to the controlee 402 through a UWB channel. In an embodiment, the control message may include information about the role (e.g., initiator or responder) of the UWB device, ranging slot index information, and/or address information about the UWB device.

Referring to operation 420a, the controller (initiator) 401 may transmit a ranging initiation message for starting the ranging exchange to the controlee (responder) 402. For example, the controller (initiator) 401 may transmit a ranging initiation message to the controlee (responder) 402 through the UWB channel.

Referring to operation 430a, the controlee (responder) 402 may transmit a ranging response message corresponding to the ranging initiation message to the controller (initiator) 401. For example, the controlee (responder) 402 may transmit a ranging response message to the controller (initiator) 403 through the UWB channel.

In an embodiment, the ranging response message may further include first measurement report information. The first measurement report message may include, e.g., an AoA measurement, a reply time measured by the responder and/or a list of round-trip time measurements for responders and responder addresses. The reply time may indicate a time difference between the reception time of the ranging initiation message and the transmission time of the ranging response message at the responder side. Based on this, single-sided two-way ranging (SS-TWR) may be performed. Calculation of time-of-flight (ToF) and distance/direction/position through SS-TWR follows the scheme defined in IEEE 802.15.4z.

Meanwhile, in the case of the DS-TWR, the controller (initiator) 401 may further transmit a ranging final message (ranging response message) for completing ranging to the controlee (responder) 402. For example, the controller (initiator) 401 may further transmit the ranging final message to the controlee (responder) 402 through the UWB channel.

In an embodiment, the ranging final message may further include second measurement report (measurement report) information. The second measurement report information may include an AoA measurement, the round-trip time for the first responder (first round-trip time) and/or a list of reply time measurements for responders and responder addresses. The first round-trip time may indicate a time difference between the ranging response message from the responder and the ranging final message from the initiator. Based on this, single-sided two-way ranging (DS-TWR) may be performed. Calculation of time-of-flight (ToF) and distance/direction/position through DS-TWR follows the scheme defined in IEEE 802.15.4z.

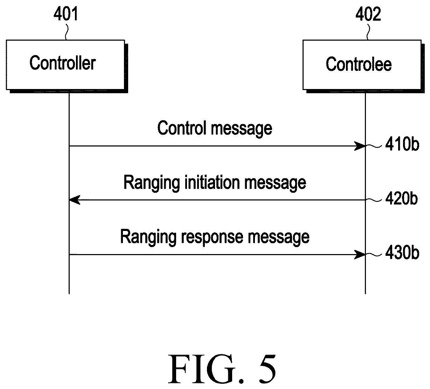

FIG. 5 illustrates a UWB ranging operation according to another embodiment of the disclosure.

The UWB ranging operation of FIG. 5 may be an example of the UWB ranging operation of the UWB procedure of FIG. 2. The UWB ranging operation of FIG. 5 may be performed through a UWB channel.

In the embodiment of FIG. 5, UWB ranging may be, e.g., single-sided two-way ranging (SS-TWR) or double-sided two-way ranging (DS-TWR).

In the embodiment of FIG. 5, unlike the embodiment of FIG. 4, it is assumed that the controller 401 serves as a responder, and the controlee 402 serves as an initiator.

Referring to operation 410b, the controller 401 may transmit a control message (ranging control message) for controlling UWB ranging to the controlee 402. For example, the controller 401 may transmit a control message to the controlee 402 through a UWB channel.

In an embodiment, the control message may include information about the role (e.g., initiator or responder) of the UWB device, ranging slot index information, and/or address information about the UWB device.

Referring to operation 420b, the controlee (initiator) 402 may transmit a ranging initiation message for starting the ranging exchange to the controller (responder) 401. For example, the controlee (initiator) 402 may transmit a ranging initiation message to the controller (responder) 401 through the UWB channel.

Referring to operation 430b, the controller (responder) 401 may transmit a ranging response message corresponding to the ranging initiation message to the controlee (initiator) 402. For example, the controller (responder) 401 may transmit a ranging response message to the controlee (initiator) 402 through the UWB channel. In an embodiment, the ranging response message may further include first measurement report information. The first measurement report message may include, e.g., an AoA measurement, a reply time measured by the responder and/or a list of round-trip time measurements for responders and responder addresses. The reply time may indicate a time difference between the reception time of the ranging initiation message and the transmission time of the ranging response message at the responder side. Based on this, single-sided two-way ranging (SS-TWR) may be performed. Calculation of time-of- flight (ToF) and distance/direction/position through SS-TWR follows the scheme defined in IEEE 802.15.4z.

Meanwhile, in the case of the DS-TWR, the controlee (initiator) 402 may further transmit a ranging response message for completing ranging to the controller (responder) 401. For example, the controlee (initiator) 402 may further transmit the ranging final message to the controller (responder) 401 through the UWB channel.

In an embodiment, the ranging final message may further include second measurement report (measurement report) information. The second measurement report information may include an AoA measurement, the round-trip time for the first responder (first round-trip time) and/or a list of reply time measurements for responders and responder addresses. The first round-trip time may indicate a time difference between the ranging response message from the responder and the ranging final message from the initiator. Based on this, single-sided two-way ranging (DS-TWR) may be performed. Calculation of time-of-flight (ToF) and distance/direction/position through DS-TWR follows the scheme defined in IEEE 802.15.4z.

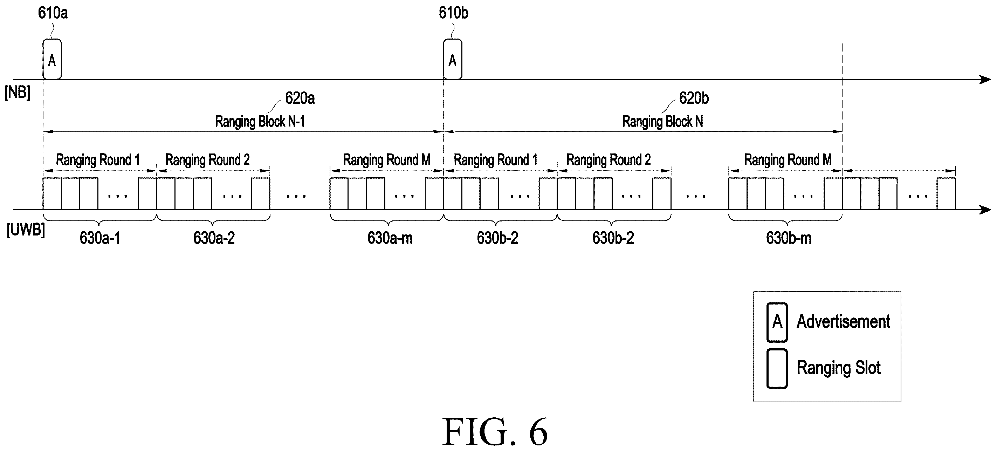

FIG. 6 illustrates a structure of a channel used in a ranging area network according to an embodiment of the disclosure.

In the disclosure, a ranging area network (RAN) may be a network including a plurality of UWB devices performing UWB ranging. The ranging area network may be referred to as a new generation (NG) ranging area network (NRAN), and the UWB device may be referred to as an NG UWB device.

In the embodiment of FIG. 6, the ranging block, the ranging round, and the ranging slot transmitted through the UWB channel may be the ranging block, the ranging round, and the ranging slot used in the session (e.g., a UWB ranging session) already established by the UWB device (e.g., the first UWB device of FIG. 6) serving as an advertiser/controller.

Referring to FIG. 6, the mirroring channel and UWB channel may be used in the ranging area network.

In an embodiment, the mirroring channel may be used to transmit and/or receive at least one advertisement message. For example, the mirroring channel may be used to transmit/receive a first advertisement message 610a and a second advertisement message 610b. Further, a connection setup channel may be further used in the ranging area network to transmit and/or receive at least one additional advertisement message, connection request message and/or connection confirmation message.

In an embodiment, the UWB channel may be used to transmit and/or receive at least one ranging message for UWB ranging. At least one ranging message may be transmitted/received through the ranging blocks 620a and 620b.

As described above with reference to FIG. 3, each ranging block may include at least one ranging round, and each ranging round may include at least one ranging slot. For example, the first ranging block 620a may include M ranging rounds 630a-1, 630a-2,... 630a-m. Each ranging round may include a plurality of ranging slots. Further, the second ranging block 620b may include M ranging rounds 630b-1, 630b-2,... 630b-m. Each ranging round may include a plurality of ranging slots.

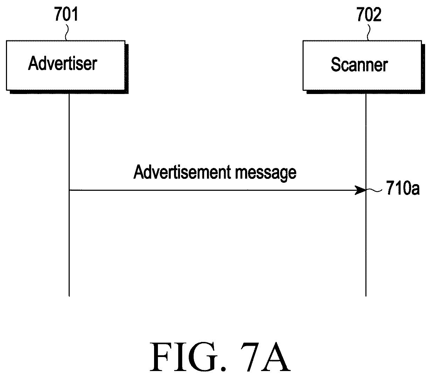

FIG. 7A illustrates an advertising operation according to an embodiment of the disclosure.

The advertising operation of FIG. 7A may be an example of the advertising operation of the NB procedure 210 of FIG. 2.

In the embodiment of FIG. 7A, the first UWB device 701 may be a UWB device serving as an advertiser and a controller. The second UWB device 701 may be a UWB device serving as a scanner and a controlee.

The advertising operation of FIG. 7A may be an advertising/discovery operation performed through the mirroring channel.

Referring to FIG. 7A, in operation 710a, the first UWB device 701 may transmit an advertisement message. In an embodiment, the first UWB device 701 may broadcast an advertisement message through at least one mirroring channel. In this case, the second UWB device 702 may scan at least one mirroring channel to receive the advertisement message. Thus, the second UWB device 702 may obtain device discovery and/or advertising information.

In an embodiment, the mirroring channel may be a channel previously known to the first UWB device 701 and the second UWB device 702. For example, the mirroring channel may be included in the information provided when installing the related UWB-enabled application, be a hard-coded default channel, or be a channel shared between the first UWB device 701 and the second UWB device 702 in other various manners. As described above, the mirroring channel may be one subchannel(s) among the candidate UWB channels.

In an embodiment, the advertisement message may include at least one of information about the start time of the ranging round, information about the channel occupancy time (e.g., information about the channel occupancy time represented as a multiple of time unit (TU)), information about the length of the ranging block, information about the ranging round, or information about the number of active rounds or active round number. Here, the active round may be a ranging round that is actually used (or occupied) among the ranging rounds.

In an embodiment, the advertisement message may include information about the session ID of the session (e.g., ranging session) (session ID information) and/or information (address information) about the address (e.g., the MAC address of the UWB device) of the UWB device transmitting the advertisement message. In an embodiment, the advertisement message may include numbering information for indicating which number of active round among all the active rounds in the corresponding ranging block the advertisement message corresponds to.

In an embodiment, the advertisement message may include information (transmission time information) about the transmission time of the subsequent corresponding advertisement message. For example, the advertisement message or transmission time information may include what number of slot the corresponding advertisement message starts to be transmitted (transmission slot indication information) and/or information about the length of the slot (slot length information).

In an embodiment, the advertisement message may include information about the period of the ranging block in which the advertisement message is transmitted. For example, the advertisement message or information about the period of the ranging block may include information (first information) about how many ranging blocks have been skipped or information (second information) about the number of consecutive ranging blocks where an advertisement message is not transmitted.

When the advertising information obtained through the operation of FIG. 7A includes all information necessary to perform UWB communication (UWB procedure), the second UWB device 702 may perform the above-described operations of FIG. 7A and then immediately perform a UWB procedure.

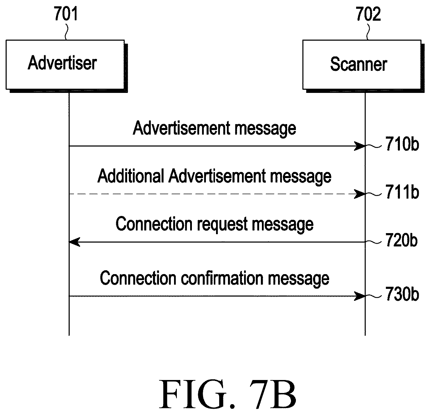

However, depending on an embodiment, the advertising information may include only a part of information necessary to perform the UWB procedure. In other words, additional advertising information may be further required to perform UWB communication. Alternatively, additional parameter negotiation or authentication may be further required to perform UWB communication. In this case, an additional advertising operation and/or connection setup operation for advertising information acquisition, additional parameter negotiation and/or authentication may further be performed. This is described below with reference to FIG. 7B.

FIG. 7B illustrates an advertising operation and a connection setup operation according to an embodiment of the disclosure.

The advertising operation and the connection setup operation of FIG. 7B may be an example of the advertising operation and the first connection setup operation of the NB procedure of FIG. 2.

In the embodiment of FIG. 7B, the first UWB device 701 may be a UWB device serving as an advertiser and a controller. The second UWB device 702 may be a UWB device serving as a scanner and a controlee.

The advertising operation of FIG. 7B may be an advertising operation performed through the mirroring channel, and the connection setup operation may be a connection setup operation performed through the connection setup channel.

Referring to FIG. 7B, in operation 710b, the first UWB device 701 may transmit an advertisement message. For example, the first UWB device 701 may broadcast an advertisement message through at least one mirroring channel. In this case, the second UWB device 702 may scan at least one mirroring channel to receive the advertisement message. Thus, the second UWB device 702 may obtain device discovery and/or advertising information.

According to an embodiment, when additional advertising information is further required, the following operation 711b may be further performed. Operation 711b may be an optional operation.

In operation 711b, the first UWB device 701 may transmit an additional advertisement message. For example, the first UWB device 701 may broadcast an additional advertisement message through a connection setup channel. In this case, the second UWB device 702 may receive the additional advertisement message by scanning the connection setup channel. In an embodiment, information about the NB connection setup channel may be included in the advertisement message of operation 710b.

Through the additional advertising operation of operation 711b, the second UWB device 702 may further obtain additional advertising information.

Further, when additional parameter negotiation and/or authentication (connection setup) is required, the following operations 720b and 730b may be further performed. Operations 720b and 730b may be optional operations.

In operation 720b, the second UWB device 702 may transmit a connection request message to the first UWB device. For example, the second UWB device 702 may transmit a connection request message to the first UWB device through a connection setup channel. In an embodiment, the connection request message may include parameter(s) for the performance of the controlee and/or information for authentication.

In operation 730b, the first UWB device 701 may transmit a connection confirmation message to the second UWB device in response to the connection request message. For example, the first UWB device 701 may transmit a connection confirmation message to the second UWB device through a connection setup channel. In an embodiment, the connection confirmation message may include parameter(s) for UWB setup, parameter(s) for a session key for protecting the UWB session, and/or information for authentication.

Through the connection setup operations of operations 720b and 730b, negotiation and/or authentication of additional parameters may be performed.

Meanwhile, the message exchange operations of operations 720b and 730b may be repeatedly performed as many times as necessary. For example, if additional message exchange is required (i.e., if message exchange is required for additional parameter negotiation and/or authentication) after performing message exchange of operations 720b and 730b once, the message exchange operations of operations 720b and 730b may be further performed as many as necessary on the corresponding connection setup channel (sub advertisement channel).

As compared to the embodiment of FIG. 7(a), the embodiment of FIG. 7(b) may reduce the congestion of the mirroring channel and enables efficient operation of a plurality of NB channels. Meanwhile, as compared with the embodiment of FIG. 7(b), the embodiment of FIG. 7(a) may perform a faster NB procedure, thereby shortening the entire time for providing the UWB service. Therefore, it is necessary to flexibly set an appropriate NB procedure and NB channel operation scheme considering the number of UWB devices participating in UWB ranging, the surrounding environment, and the like.

Meanwhile, UWB ranging-based applications are being actively developed, and for example, in a UWB payment system, a UWB contention based ranging may be used to select the closest UWB device among surrounding UWB devices and provide a payment service to a user of the corresponding UWB device. In this case, the selected UWB device may provide payment information using UWB data communication with the UWB payment system.

However, when supporting ranging and data communication between a plurality of UWB devices in the same UWB channel, congestion increases and obstacles to smooth UWB communication may occur due to limitations of time resources.

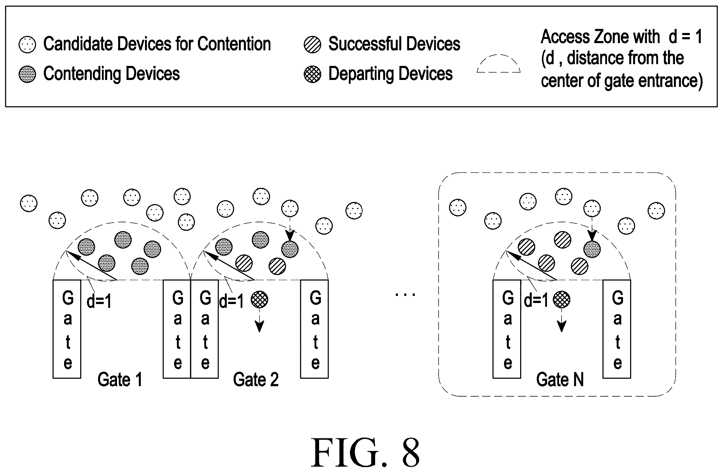

FIG. 8 is a view illustrating a UWB ranging method in a system including a plurality of gates according to an embodiment of the disclosure.

Referring to FIG. 8, a system capable of providing a UWB payment service may include a plurality of gates (Gate 1 to Gate N) and a plurality of UWB devices. For example, the system may be a UWB gate payment system used in a subway.

Each of the plurality of gates (Gate 1 to Gate 1) may perform contention-based ranging and data communication using time resources that do not overlap other gates to minimize interference.

Among the plurality of UWB devices, candidate devices for contention are positioned around the plurality of gates (Gate 1 to Gate N), but may not be positioned within an access zone set for each of the plurality of gates (Gate 1 to Gate N). The candidate devices for contention may not perform contention-based ranging and data communication until they move into the access zone.

According to an embodiment, the access zone may be configured as a semicircular area positioned within a threshold distance (d) from a midpoint between two adjacent gates (or a midpoint of gate entrances).

Among the plurality of UWB devices, contending devices are positioned within the access zone and may perform contention-based ranging with the corresponding gates. Among the contending devices, some devices (successful devices) may successfully perform contention-based ranging with the corresponding gates. Among the some devices (successful devices), departing devices may pass through the corresponding gates.

According to an embodiment, the departing devices passing through the corresponding gate may perform a payment procedure through data communication (or UWB communication) with the corresponding gate.

According to an embodiment, at least one of the plurality of gates (Gate 1 to Gate N) may discover the UWB device closest to the corresponding gate among the plurality of UWB devices using contention-based ranging.

According to an embodiment, at least one of the plurality of gates (Gate 1 to Gate N) may continuously perform UWB ranging to track at least one of the plurality of UWB devices.

However, to meet delay requirements (e.g., 1 second/user), the allocated UWB time resources may not be sufficient to support a large number of UWB gates, and a need for a resource allocation method that can satisfy delay requirements is emerging.

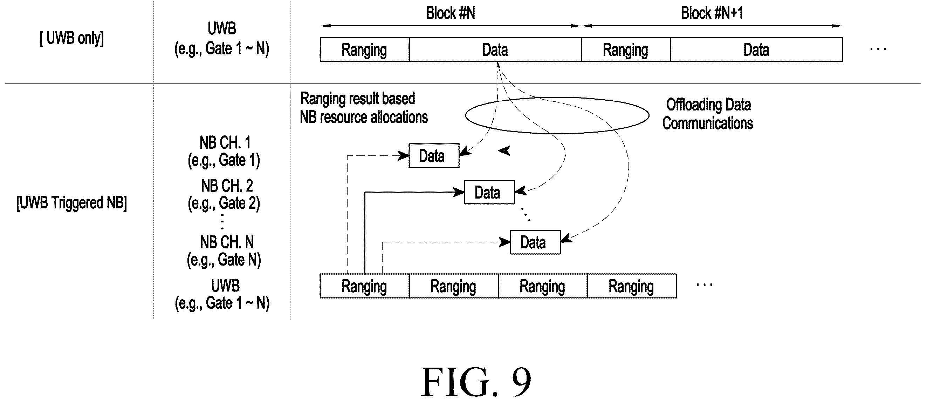

FIG. 9 is a view illustrating a UWB-based NB resource allocation method according to an embodiment of the disclosure.

Referring to FIG. 9, a system providing services using UWB communication may include a plurality of gates (Gate 1 to Gate N) and a plurality of UWB devices.

In a UWB only case, block #N may include a time interval for UWB ranging and a time interval for UWB data communication. Block #N+1 adjacent to block #N may similarly include a time interval for UWB ranging and a time interval for UWB data communication. The plurality of gates (Gate 1 to Gate N) may perform contention-based ranging and data communication using the same UWB channel.

The disclosure proposes a method for allocating resources for data communication to an NB channel to satisfy requirements/conditions according to UWB applications and to assist the UWB channel (Offloading Data Communications). Time resources saved by NB channel offloading may be used for more frequent ranging or an increase in the number of gates.

According to an embodiment, an initiator may allocate an NB channel and/or time resources to at least one responder. According to an embodiment, an initiator may generate an IE for NB resource allocation (NB Allocation IE) and transmit the IE for the NB resource allocation to at least one responder.

In a UWB Triggered NB case, UWB ranging between the plurality of gates (Gate 1 to Gate N) and the plurality of UWB devices is performed using a UWB channel, and data communication between the plurality of gates (Gate 1 to Gate N) and the plurality of UWB devices may be performed using at least one NB channel. For example, an initiator may allocate a first NB channel for data communication of the first gate (Gate 1), allocate a second NB channel for data communication of the second gate (Gate 2), and allocate an Nth NB channel for data communication of the Nth gate (Gate N).

According to an embodiment, the first gate (Gate 1) performs ranging through a UWB channel and performs data communication using the first NB channel, the second gate (Gate 2) performs ranging through the same UWB channel and performs data communication using the second NB channel, and the Nth gate (Gate N) performs ranging through the same UWB channel and may perform data communication using the Nth NB channel.

According to an embodiment, each of the plurality of gates (Gate 1 to Gate N) may configure its own NB channel that can be allocated to the closest UWB device selected using UWB ranging results.

According to an embodiment, an initiator may transmit an allocation packet including an IE for NB resource allocation (NB Allocation IE) to at least one responder. According to an embodiment, an initiator may transmit an allocation packet after a ranging phase.

According to an embodiment, an initiator may transmit the allocation packet based on ranging results. For example, when a responder sufficiently approaches an initiator (e.g., when the distance between the two is equal to or less than a threshold), the initiator may transmit NB allocation information to the responder. According to an embodiment, an initiator may transmit an allocation report along with NB allocation information.

According to an embodiment, the IE for the NB resource allocation may include at least one of an NB channel number (NB channel #), an offset to start of NB communication, a duration of NB communication, and an interval of NB communication.

According to an embodiment, the IE for the NB resource allocation may indicate start timing (i.e., offset to start of NB communication, duration of NB communication, interval of NB communication) utilizing a block structure (e.g., block duration, round duration, or slot duration).

According to an embodiment, when an initiator and a responder request NB resource allocation, an IE for NB resource allocation may be defined similar to a ranging device management (RDM) IE or a Scheduling IE of IEEE 802.15.4z.

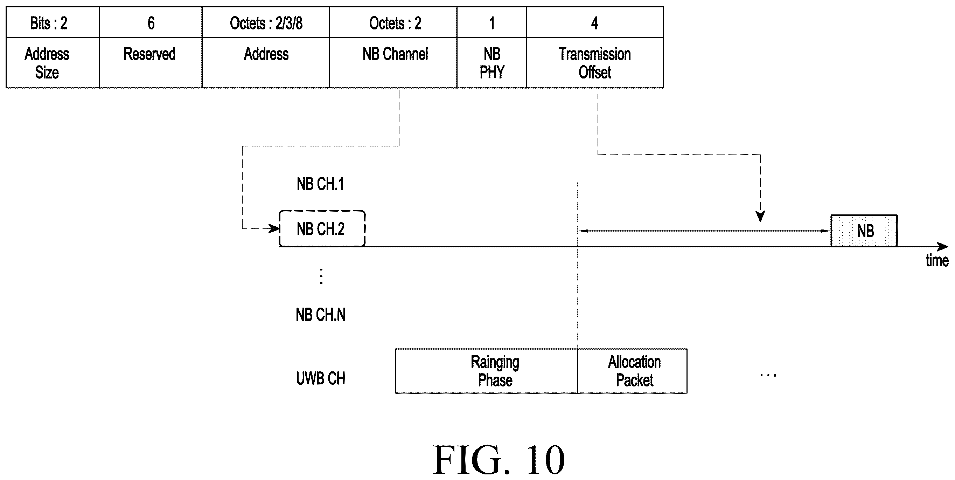

FIG. 10 is a view illustrating an NB Allocation IE and an NB Allocation procedure according to an embodiment of the disclosure.

Referring to FIG. 10, an NB Allocation IE may include at least one of an Address Size field, a Reserved field, an Address field, an NB Channel field, an NB PHY field, and a Transmission Offset field.

The Address Size field may specify the size of an address used in the NB Allocation IE.

The Address field may identify a participating device. The size of the Address field may be designated by the Address Size field.

The NB Channel field may be used to allocate an NB channel index to a device identified by the Address field.

The NB PHY field may specify an NB PHY configuration index (e.g., O-QPSK PHY #1 -#10).

The Transmission Offset field may specify the remaining time from the start of an allocation packet (or the end of a round/block) to the start of an NB packet in a channel designated in the NB Channel field.

Referring to FIG. 10, a first UWB device (or initiator) may transmit an allocation packet including an NB Allocation IE to a second UWB device (or responder) after a ranging phase. According to an embodiment, the first UWB device (or initiator) may minimize information about NB resource allocation in a measurement report phase after a ranging phase and transmit an allocation packet to the second UWB device (or responder).

According to an embodiment, the first UWB device (or initiator) may transmit and/or receive a plurality of NB packets based on NB resources configured in the NB Allocation IE.

For example, the NB Channel field included in the NB Allocation IE indicates to use a second NB channel for data communication, and the first UWB device (or initiator) and the second UWB device (or responder) may perform data communication using the second NB channel from a time configured based on a Transmission Offset field included in the NB Allocation IE.

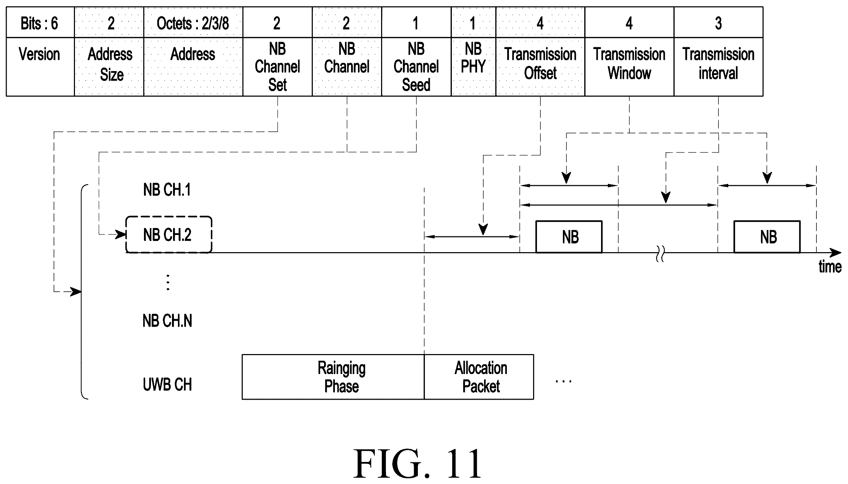

FIG. 11 is a view illustrating an NB Allocation IE and an NB Allocation procedure according to another embodiment of the disclosure.

Referring to FIG. 11, an NB Allocation IE may include at least one of a Version field, an Address Size field, an Address field, an NB Channel Set field, an NB Channel field, an NB Channel Seed field, an NB PHY field, a Transmission Offset field, a Transmission Window field, and a Transmission interval field.

The Version field may specify version information of the NB Allocation IE.

The Address Size field may specify the size of an address used in the NB Allocation IE.

The Address field may identify a participating device. The size of the Address field may be designated by the Address Size field.

The NB Channel Set field may indicate a set of used channels and unused channels.

The NB Channel field may be used to allocate an NB channel index to a device identified by the Address field.

The NB Channel Seed field may specify a value for a seed of a hopping function when NB hopping is used (e.g., when the value is not 0).

The NB PHY field may specify an NB PHY configuration index (e.g., O-QPSK PHY #1 -#10).

The Transmission Offset field may specify the remaining time from the start of an allocation packet (or the end of an allocation packet, or the end of a round/block allocated to an allocation packet) to the start of an NB packet in a channel designated in the NB Channel field.

The Transmission Window field may specify a duration of NB transmission in a channel designated by the NB Channel field.

The Transmission interval field may indicate the remaining time from the start of a current connection window to the start of a next connection window.

Referring to FIG. 11, a first UWB device (or initiator) may transmit an allocation packet including an NB Allocation IE to a second UWB device (or responder) after a ranging phase. According to an embodiment, the first UWB device (or initiator) may transmit an allocation packet including information about NB resource allocation to the second UWB device (or responder) in a measurement report phase after a ranging phase.

According to an embodiment, the first UWB device (or initiator) may transmit and/or receive a plurality of NB packets based on NB resources configured in the NB Allocation IE.

For example, a plurality of NB channels (first NB channel to Nth NB channel) may be indicated in an NB Channel Set field included in the NB Allocation IE. A UWB device may transmit and/or receive a plurality of NB packets through a second NB channel based on an NB Channel field, an NB Channel Seed field, a Transmission Offset field, and a Transmission Window field included in the NB Allocation IE. Thereafter, the UWB device may transmit and/or receive a plurality of NB packets again through the second NB channel after a predetermined time based on a Transmission Window field and a Transmission interval field included in the NB Allocation IE.

According to an embodiment of the disclosure, congestion of a UWB channel may be alleviated through NB channel offloading. According to an embodiment, an on-demand scheduling-based NB resource usage method may be provided. According to an embodiment, narrow band-multi-millisecond-ultra wide band (NB-MMS-UWB) may provide strict rules and detailed roles for NB to maximize performance. According to an embodiment, an initiator may freely allocate NB resources to at least one responder regardless of NB-MMS-UWB usage. According to an embodiment, in the case of NB-MMS-UWB, a packet including NB resource allocation information may be transmitted in an NB channel controlling a UWB channel.

The MMS UWB may be a mode in which multiple fragments/packets are transmitted through UWB at, at least, 1 millisecond (ms) intervals to enhance link budget and ToF accuracy. Here, the transmission interval of multiple fragments/packets is not limited to a specific length. For example, each fragment (or UWB packet including each fragment) may be multi-transmitted through UWB at intervals of 1 ms. These multiple fragments/packets may be used for UWB ranging (e.g., SS-TWR, DS-TWR, etc.).

According to an embodiment, a UWB-based NB resource allocation method may be provided. A NB channel may be considered as a data channel capable of offloading data communication in UWB. Ranging frequency or system performance may be enhanced using time resources saved by NB offloading.

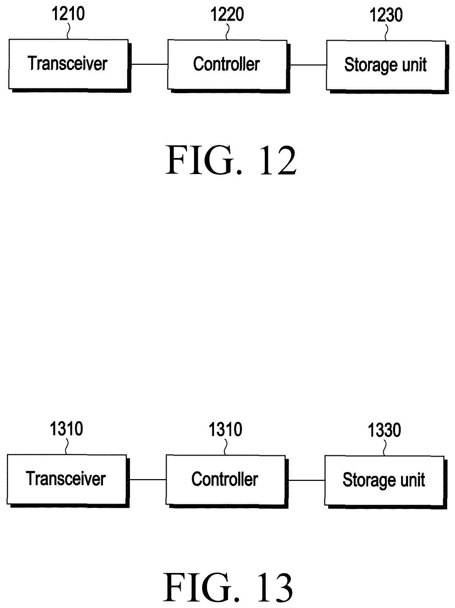

FIG. 12 illustrates a structure of a first UWB device according to an embodiment of the disclosure.

In the embodiment of FIG. 12, the first UWB device may correspond to the UWB device of FIG. 1, include a UWB device, or may be an electronic device that may include a portion of a UWB device.

In the embodiment of FIG. 12, the first UWB device may be a UWB device serving as an initiator and/or controller.

Referring to FIG. 12, the first UWB device may include a transceiver 1210, a controller 1220, and a storage unit 1230. In the disclosure, the controller may be defined as a circuit, an application-specific integrated circuit, or at least one processor.

The transceiver 1210 may transmit and receive a signal to and from another device. The transceiver 1210 may transmit/receive data to/from another device through, e.g., at least one NB channel and/or at least one UWB channel.

In an embodiment, the transceiver 1210 may include at least one first transceiver supporting the NB channel and at least one second transceiver supporting the UWB channel. In another embodiment, the transceiver 1210 may include at least one transceiver supporting both the NB channel and the UWB channel.

The controller 1220 may control the overall operation of the electronic device according to an embodiment. For example, the controller 1220 may control signal flow between blocks to perform operations according to the flowchart described above. Specifically, the controller 1220 may control the operations of the first UWB device described above with reference to FIGS. 1 to 11.

The storage unit 1230 may store at least one of information transmitted/received via the transceiver 1210 and information generated via the controller 1220. For example, the storage unit 1230 may store information and data necessary for the method described above with reference to FIGS. 1 to 11.

According to an embodiment, the controller 1220 may perform ranging in a UWB channel and control to transmit a packet including narrow band (NB) resource allocation information to a second UWB device in the UWB channel or an NB channel controlling the UWB channel. According to an embodiment, the controller 1220 may perform data communication with the second UWB device in a first NB channel configured based on the NB resource allocation information.

According to an embodiment, in the case of NB-MMS-UWB, a packet including NB resource allocation information may be transmitted in an NB channel controlling a UWB channel.

According to an embodiment, the NB resource allocation information may include at least one of an address size field, an address field identifying a participating device, an NB channel field indicating an NB channel for performing the data communication, an NB PHY field, and a transmission offset field.

According to an embodiment, the transmission offset field may specify a time interval from a transmission time of the packet to a time when NB packet transmission/reception starts in the NB channel.

According to an embodiment, the NB resource allocation information may further include at least one of an NB channel set field indicating a set of used NB channels and unused NB channels, an NB channel seed field specifying a seed value related to NB hopping, a transmission window field, and a transmission interval field.

According to an embodiment, the controller 1220 may determine whether a distance between the first UWB device and the second UWB device is equal to or less than a threshold based on a result of performing ranging, and if the distance is equal to or less than the threshold, control to transmit the packet including the NB resource allocation information to the second UWB device.

According to an embodiment, the controller 1220 may perform data communication with a third UWB device in a second NB channel configured based on the NB resource allocation information.

According to an embodiment, the NB channel may be a sub channel of an industrial, scientific and medical (ISM) band or an unlicensed national information infrastructure (U-NII) band. According to an embodiment, the NB channel may be a sub channel of one of candidate UWB channels allocated for UWB communication.

FIG. 13 illustrates a structure of a second UWB device according to an embodiment of the disclosure.

In the embodiment of FIG. 13, the first UWB device may correspond to the UWB device of FIG. 2, include a UWB device, or may be an electronic device that may include a portion of a UWB device.

In the embodiment of FIG. 13, the second UWB device may be a UWB device serving as a responder and/or controlee.

Referring to FIG. 13, the second UWB device may include a transceiver 1310, a controller 1320, and a storage unit 1330. In the disclosure, the controller may be defined as a circuit, an application-specific integrated circuit, or at least one processor.

The transceiver 1310 may transmit and receive a signal to and from another device. The transceiver 1310 may transmit/receive data to/from another device through, e.g., at least one NB channel and/or at least one UWB channel.

In an embodiment, the transceiver 1310 may include at least one first transceiver supporting the NB channel and at least one second transceiver supporting the UWB channel. In another embodiment, the transceiver 1310 may include at least one transceiver supporting both the NB channel and the UWB channel.

The controller 1320 may control the overall operation of the electronic device according to an embodiment. For example, the controller 1320 may control inter-block signal flow to perform the operations according to the above-described flowchart. Specifically, the controller 1320 may control the operations of the second UWB device described above with reference to FIGS. 1 to 11.

The storage unit 1330 may store at least one of information transmitted/received via the transceiver 1310 and information generated via the controller 1320. For example, the storage unit 1330 may store information and data necessary for the method described above with reference to FIGS. 1 to 11.

According to an embodiment, the controller 1320 may receive a packet including narrow band (NB) resource allocation information from a first UWB device in a UWB channel or an NB channel controlling the UWB channel. According to an embodiment, the controller 1320 may perform data communication with the first UWB device in an NB channel configured based on the NB resource allocation information.

According to an embodiment, in the case of NB-MMS-UWB, a packet including NB resource allocation information may be transmitted in an NB channel controlling a UWB channel.

According to an embodiment, the NB resource allocation information may include at least one of an address size field, an address field identifying a participating device, an NB channel field indicating an NB channel for performing the data communication, an NB PHY field, and a transmission offset field.

According to an embodiment, the NB resource allocation information may further include at least one of an NB channel set field indicating a set of used NB channels and unused NB channels, an NB channel seed field specifying a seed value related to NB hopping, a transmission window field, and a transmission interval field.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method of a first ultra wide band (UWB) device, the method comprising:
performing ranging in a UWB channel;
transmitting a packet including narrow band (NB) resource allocation information to a second UWB device in the UWB channel or an NB channel controlling the UWB channel; and
performing data communication with the second UWB device in a first NB channel configured based on the NB resource allocation information.

2. The method of claim 1, wherein the NB resource allocation information includes at least one of an address size field, an address field identifying a participating device, an NB channel field indicating an NB channel for performing the data communication, an NB PHY field, and a transmission offset field.

3. The method of claim 2, wherein the transmission offset field specifies a time interval from a transmission time of the packet to a time when NB packet transmission/reception starts in the NB channel.

4. The method of claim 2, wherein the transmission offset field specifies a time interval from an end time of a round or block allocated to the packet to a time when NB packet transmission/reception starts in the NB channel.

5. The method of claim 2, wherein the NB resource allocation information further includes at least one of an NB channel set field indicating a set of used NB channels and unused NB channels, an NB channel seed field specifying a seed value related to NB hopping, a transmission window field, and a transmission interval field.

6. The method of claim 1, further comprising:
identifying whether a distance between the first UWB device and the second UWB device is equal to or less than a threshold based on a result of performing ranging; and
transmitting the packet including the NB resource allocation information to the second UWB device if the distance is equal to or less than the threshold.

7. The method of claim 1, further comprising performing data communication with a third UWB device in a second NB channel configured based on the NB resource allocation information.

8. The method of claim 1, wherein the NB channel is a sub channel of an industrial, scientific and medical (ISM) band or an unlicensed national information infrastructure (U-NII) band, or the NB channel is a sub channel of one of candidate UWB channels allocated for UWB communication.

9. A method of a second ultra wide band (UWB) device, comprising:
receiving a packet including narrow band (NB) resource allocation information from a first UWB device in a UWB channel or an NB channel controlling the UWB channel; and
performing data communication with the first UWB device in an NB channel configured based on the NB resource allocation information.

10. The method of claim 9, wherein the NB resource allocation information includes at least one of an address size field, an address field identifying a participating device, an NB channel field indicating an NB channel for performing the data communication, an NB PHY field, and a transmission offset field.

11. A first ultra wide band (UWB) device comprising:
a transceiver; and
a controller, wherein the controller is configured to:
perform ranging in a UWB channel;
control to transmit a packet including narrow band (NB) resource allocation information to a second UWB device in the UWB channel or an NB channel controlling the UWB channel; and
perform data communication with the second UWB device in a first NB channel configured based on the NB resource allocation information.

12. The first UWB device of claim 11, wherein the NB resource allocation information includes at least one of an address size field, an address field identifying a participating device, an NB channel field indicating an NB channel for performing the data communication, an NB PHY field, and a transmission offset field.

13. The first UWB device of claim 12, wherein the transmission offset field specifies a time interval from a transmission time of the packet to a time when NB packet transmission/reception starts in the NB channel.

14. A second ultra wide band (UWB) device comprising:
a transceiver; and
a controller, wherein the controller is configured to:
receive a packet including narrow band (NB) resource allocation information from a first UWB device in a UWB channel or an NB channel controlling the UWB channel; and
perform data communication with the first UWB device in an NB channel configured based on the NB resource allocation information.

15. The second UWB device of claim 14, wherein the NB resource allocation information includes at least one of an address size field, an address field identifying a participating device, an NB channel field indicating an NB channel for performing the data communication, an NB PHY field, and a transmission offset field.
